# EUROPEAN PATENT APPLICATION

(11) **EP 4 632 331 A1**
(43) Date of publication of application: **15.10.2025**
(21) Application number: 24169466.0
(22) Date of filing: 10.04.2024
(51) Int. Cl.: G01F 1/34, G01F 1/40, G05D 7/01, F04D 25/08, F04D 27/00

(54) **A VOLUMETRIC COUPLING, A VENTILATOR CHAMBER, AND A VENTILATION UNIT WITH SAID VOLUMETRIC COUPLING**

(71) Applicant: Dantherm Denmark A/S, 7800 Skive (DK)
(72) Inventor: Jeppesen, Henrik Kjær, 7800 Skive (DK)
(74) Representative: Patrade A/S

(57) **Abstract**

A volumetric coupling (1) for guiding an airflow and enabling better measurement of said airflow, the volumetric coupling (1) comprising:
- an outer frame face (13) and an inner duct face (12), wherein the faces (12, 13) define a duct (11) narrowing from the outer frame face (13) to the inner duct face (12), the volumetric coupling (1) being adapted for an airflow in a flow direction (2) along the narrowing of the duct (11);
- a high-pressure chamber (24) and a low-pressure chamber (25), wherein the chambers (24, 25) at least partially envelop the duct (11);
- a first set of holes (14) arranged on the outer frame face (13), the first set of holes (14) being connected to the high-pressure chamber (24);
- a second set of holes (15) arranged on the inner duct face (12), the second set of holes (15) being connected to the low-pressure chamber (25); and
- a first aperture (34) connected to the high-pressure chamber (24) and a second aperture (35) connected to the low-pressure chamber (25), the apertures (34,35) being configured for connection to a pressure transducer (30).

## Description

### Field of the Invention

The present invention relates to the field of a volumetric coupling for guiding an airflow and for improving the process of measuring the airflow, wherein the volumetric coupling is configured for being arranged on a ventilator chamber or a ventilation unit. The invention also relates to a ventilator chamber comprising an airflow measurement apparatus and a ventilation unit comprising one or more ventilator chambers.

### Background of the Invention

In the field of ventilation units for certain applications there is a requirement for a constant flow of air through the ventilation unit. To achieve constant flow, the airflow must be measured accurately so that one or more ventilators in a ventilation unit can be controlled to balance the airflow by increasing or decreasing the airflow generated by the ventilator.

One solution is to calibrate the ventilation unit by measuring the airflow across a range of revolutions per minute (RPM) of the ventilator. However, there is a requirement for measuring the airflow continuously because the flow may change over time, due to clogging caused by particles such as dust etc., and accumulation of water condensate or eventual soiling.

One challenge which occurs in some methods of measuring airflow within a ventilation unit is that the measurement assembly creates an additional pressure loss and thus also an energy loss. A further downside of these methods is the space requirement of the measurement assembly and a lower measurement accuracy.

One further challenge in measuring the airflow is that the measurement assembly may become clogged due to ingress of water condensate or eventual soiling.

### Object of the Invention

One objective of the present disclosure is to provide a volumetric coupling for guiding an airflow and enabling better measurement of the airflow.

A further objective is to provide a volumetric coupling, wherein less dust and water condensate becomes stuck in the volumetric coupling.

A further objective is to provide a ventilator chamber or ventilation unit with the volumetric coupling.

### Description of the Invention

One objective of the invention is achieved by a volumetric coupling for guiding an airflow and enabling better measurement of the airflow, the volumetric coupling comprising:
- an outer frame face and an inner duct face, wherein the faces define a duct narrowing from the outer frame face to the inner duct face, the volumetric coupling being adapted for an airflow in a flow direction along the narrowing of the duct;
- a high-pressure chamber and a low-pressure chamber, wherein the chambers at least partially envelop the duct;
- a first set of holes arranged on the outer frame face, the first set of holes being connected to the high-pressure chamber;
- a second set of holes arranged on the inner duct face, the second set of holes being connected to the low-pressure chamber; and
- a first aperture connected to the high-pressure chamber and a second aperture connected to the low-pressure chamber, the apertures being configured for connection to a pressure transducer.

In one aspect the volumetric coupling is adapted for a complementary ventilator, e.g., a fan or a blower, wherein the ventilator is arranged in the duct. A central axis, i.e., the rotational axis of the ventilator, may be arranged substantially coincident with a centre axis of the outer frame face, a centre axis of the duct, and/or centre axis of the inner duct face.

In another aspect, the outer frame face and/or the inner duct face may be arranged substantially along the same plane as a plane defined by a ventilator chamber opening. One advantage of this arrangement is that the volumetric coupling is provided flush or substantially flush with the top of the ventilator and hence has a low space requirement. One further advantage is a minimal pressure loss due to the arrangement of the volumetric coupling along the suction side, compared to some known measurement assemblies arranged on a pressure side of the ventilator, because the measurement assembly may have a large opening for measurement, e.g., such as in the case of Pitot tubes or Pitot probes, wherein the pressure side is opposite to the suction side of the ventilator. Further advantages of the volumetric coupling are that some known measurement assemblies may partially block the airflow and/or create turbulence in the airflow, which is avoided by making a low-profile volumetric coupling arranged on the suction side.

In another aspect, the volumetric coupling may be arranged on a ventilator chamber outlet, i.e. the plane spanned by the outer frame face is aligned with a plane spanning the ventilator chamber outlet.

The pressure transducer may be configured to measure the pressure in the high-pressure chamber and the low-pressure chamber and may be arranged in direct contact with the first and second aperture. One effect of arranging the pressure transducer in direct contact with the two apertures is that the assembly is simplified. One further effect is that measurement accuracy is improved because the distance between the two chambers and the pressure transducer is decreased, and no additional measuring tubing or hose is arranged between the two chambers and the pressure transducer. In another aspect, the pressure transducer may be connected to the first and second aperture by a hose or a tube; however, the hose or the tube may reduce the precision of the pressure transducer.

The measurement of the airflow may be done following a principle of differential pressure, e.g., similar to a Venturi effect and Bernoulli's principle, where a difference in pressure is measured between the high-pressure chamber and the low-pressure chamber and is converted to a flow value.

The high-pressure chamber has a pressure representing a high-pressure side of the volumetric coupling, wherein the outer frame face faces the high-pressure side. The low-pressure chamber has a pressure representing a low-pressure side of the volumetric coupling, wherein the inner duct face faces the low-pressure side. This is achieved through the outer frame face narrowing towards the inner duct face which is in the direction of the airflow.

In one aspect of the volumetric coupling the pressure transducer may be arranged on a back side of the volumetric coupling being opposite to an airflow side, wherein the airflow side faces the narrowing of the duct of the volumetric coupling. One advantage of not arranging the pressure transducer on the airflow side is that the airflow is not blocked by the construction of the pressure transducer and the height of the volumetric coupling above ventilator is minimal. One further advantage of arranging the pressure transducer on the back side of the volumetric coupling is that it avoids a connection between the pressure transducer and the two chambers being made up of measuring tubes or hoses, which both eases assembly and increases measurement accuracy.

In one aspect of the volumetric coupling, all holes in the first set of holes and the second set of holes may be arranged an equal distance to the duct and/or a centre of the duct. One advantage of this arrangement is that the pressure in the high-pressure chamber and the low-pressure chamber more accurately represents the pressure on the high-pressure side and the low-pressure side, respectively, and therefore increases the accuracy of the airflow measurement.

In one aspect of the volumetric coupling the outer frame face and/or the inner duct face may be circular. One advantage of a circular shape of the volumetric coupling is that it fits most ventilators. Furthermore, the circular inner duct face may be arranged centrally in the volumetric coupling, thereby it easily enables the first set of holes and second set of holes to be arranged an equal distance to the duct and/or the centre of the duct.

In one aspect of the volumetric coupling, the second set of holes is arranged closer to the duct than the second set of holes. One advantageous effect of this is that the second set of holes will be near a low-pressure airflow and the first set of holes will be near a high-pressure airflow, due to the narrowing from the outer frame face to the inner duct face.

In a further embodiment of the volumetric coupling, the volumetric coupling is shaped as a funnel, so that the outer frame face is sloping from the outer frame face towards the inner duct face.

One effect achieved by shaping the volumetric coupling as a funnel is that the distance between each hole in the first set of holes and the second set of holes is increased, thereby increasing the difference between the pressure measured in each corresponding chamber, which in turn increases the accuracy of the airflow measurement.

One further effect achieved by shaping the volumetric coupling, or the duct as a funnel, is that the height of the volumetric coupling relative to the ventilator is minimal.

The height may be reduced because the inner duct face may be arranged inside the ventilator chamber opening. I.e., a part of the duct may surround a vertical part of the ventilator or the entire vertical part of the ventilator, wherein the vertical part stretches along the rotational axis of the ventilator and an outer circumference of the ventilator's blades. As such, a further advantage is achieved because a vertical distance measured between the first set of holes and the second set of holes is increased. The vertical distance is measured between two planes, wherein the planes each span the first set of holes and the second set of holes. I.e., the vertical distance is measured perpendicular to the planes spanned by the inner duct face or the outer frame face.

In a further embodiment of the volumetric coupling, the volumetric coupling comprises a set of channels interconnecting the second set of holes and the low-pressure chamber, wherein the second set of holes are downstream to the low-pressure chamber relative to the flow direction.

One effect of providing a channel interconnecting the second set of holes and the low-pressure chamber is that the second set of holes may be arranged as close as possible to the duct, wherein the duct corresponds to the inner diameter of the volumetric coupling. Furthermore, the channels enable the vertical distance between the first set of holes and the second set of holes to be increased. As such the pressure measured in the low-pressure chamber is substantially the lowest pressure across the volumetric coupling and/or the ventilator.

One effect of providing the second set of holes downstream to the low-pressure chamber relative to the flow direction, is to ensure that the second set of holes, the channels, and/or the low-pressure chamber does not become clogged by particles such as dust etc., and accumulation of water condensate or eventual soiling. This effect is achieved because the orientation of the channels is in the opposite direction of the flow direction, thus all particles will be drawn in the flow direction and not up through the second set of holes or the channels.

In a further embodiment of the volumetric coupling, openings of the first and/or second set of holes are shaped like teardrops, wherein an apex of the teardrop is pointed in the flow direction. In other embodiments one, two or more openings of the first and/or second set of holes are shaped like teardrops.

In one aspect of the opening of the first and/or second set of holes, the apex of the teardrop may be pointed in a direction towards the inner duct face.

In one aspect of the opening and the teardrop shape, the apex of the teardrop may be a trailing edge and the opposite base of the teardrop may be a leading edge.

In a further aspect of the opening, the opening may be shaped like a gutter, trench, or trough pointing towards the inner duct face and/or in the flow direction.

One effect of shaping the opening of the first and/or second set of holes like a teardrop, gutter, trench, or trough is that any particles such as dust etc., and accumulation of water condensate or eventual soiling is prevented, as it cannot become built-up in the opening of the first and/or second set of holes. Furthermore, because the apex of the teardrop, the gutter, trench, or trough points towards the inner duct face and/or in the flow direction, the particles are passively pushed in the flow direction.

In a further embodiment of the volumetric coupling, the first and/or second set of holes substantially surrounds the duct.

As a result of the first and/or second set of holes substantially surrounding the duct, the high-pressure chamber and/or the low-pressure chamber may also surround the duct.

In one aspect, the first and/or second set of holes may be arranged in a substantially circular pattern wherein a centre of the circular pattern is the centre of the duct.

One effect of the first and/or second set of holes substantially surrounding the duct is that the pressure measured in the high-pressure chamber and the low-pressure chamber accurately represents the high-pressure at the outer frame face and the low-pressure at the inner duct face. A further effect achieved is that the respective apertures may be arranged at any one point along the high-pressure chamber and the low-pressure chamber, so that a pressure transducer can connect to the two chambers through the apertures.

In a further embodiment of the volumetric coupling, the first and/or second set of holes are evenly distributed.

In this case, "evenly distributed" means that each hole in the first and/or second set of holes have an equal distance to a neighbouring hole in the set of holes.

One effect of the first and/or second set of holes being evenly distributed is that the pressure measured in the high-pressure chamber and/or the low-pressure chamber is substantially evenly distributed over an envelope of the duct, thus ensuring that the airflow measurement is accurate.

In a further embodiment of the volumetric coupling, the volumetric coupling comprises a first assembly part and a second assembly part configured to be connected to form the volumetric coupling.

In one aspect the first assembly part or the second assembly part may comprise the channels arranged between the low-pressure chamber and the second set of holes. In this aspect the channels may be provided by a pair of walls protruding from the first assembly part or the second assembly part, and wherein the pair of walls are configured for being connected to the other assembly part.

In a further aspect the first assembly part and/or the second assembly part may comprise a set of walls protruding from the first assembly part or the second assembly part and wherein the set of walls are configured for being connected to the other assembly part so that the high-pressure chamber and the low-pressure chamber may be formed between the surfaces of the first assembly part, the set of walls, and the second assembly part.

One effect of providing the volumetric coupling by connecting a first assembly part to a second assembly part is that the process of producing the volumetric coupling is greatly simplified, faster and cheaper, because volumetric coupling only requires two parts to be assembled. The first assembly part and the second assembly part may be produced by being machined by e.g., a lathe or mill, or by being produced in an injection moulding machine, casted in a mould, or produced by a 3D printer.

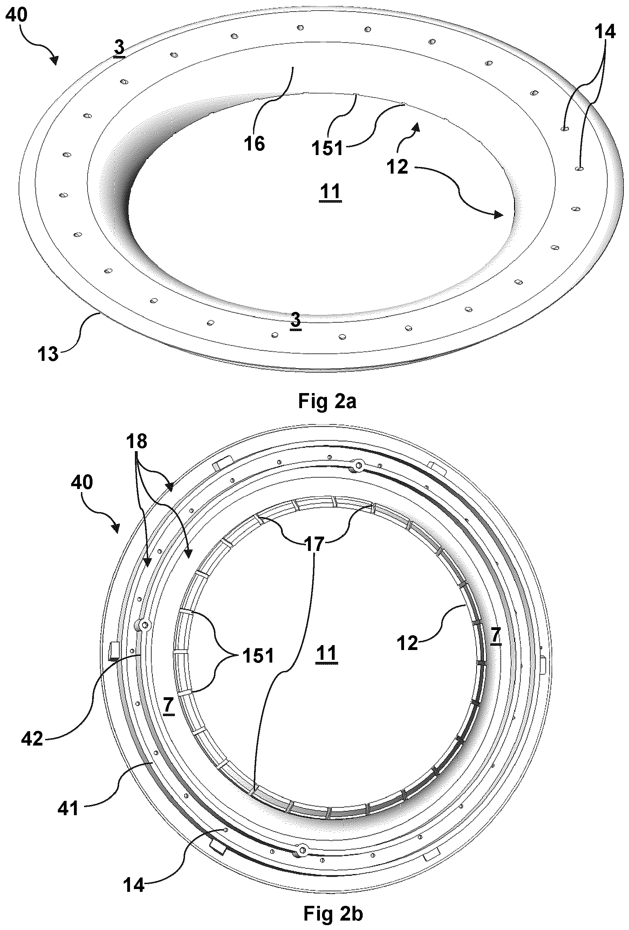

Further aspects of the first assembly part and/or the second assembly part are shown in figures 2a through 3c and the corresponding description of the figures.

In a further embodiment of the volumetric coupling, the first assembly part and the second assembly part can be connected by a process of ultrasonic welding.

One effect of providing the one or more connections between the first assembly part and the second assembly part by ultrasonic welding is that the connections become airtight, so that there is no leakage in e.g., the high-pressure chamber and/or the low-pressure chamber.

In a further embodiment of the volumetric coupling, the high-pressure chamber and the low-pressure chamber are arranged on a chamber plane being substantially parallel to a duct plane spanning the duct.

In one aspect, the ventilator chamber inlet may be arranged substantially within the plane spanning the duct, so that the chamber plane may be arranged substantially parallel and/or substantially close to the duct plane spanning the duct. As such one advantage is achieved where the height of the volumetric coupling relative to the ventilator surface is minimal.

In a further embodiment of the volumetric coupling, a back face is on an opposite side of the outer frame face, the back face comprising one or more hooks configured for being joined with a notch by rotating the volumetric coupling, so that the volumetric coupling is fastened to the notch.

One advantage of providing one or more corresponding hooks and notches is that the volumetric coupling is fast to install and remove when installation and maintenance is performed. Furthermore, as the volumetric coupling is quick to remove and replace, it becomes easy to access parts of an installation installed behind and/or underneath the volumetric coupling, e.g. such as replacing or servicing a ventilator.

A further objective of the invention is achieved by a ventilator chamber for creating airflow comprising:
- an inlet for suction of air into the ventilator chamber;
- an outlet for pushing of air out of the ventilator chamber;
- a ventilator configured for creating the airflow from the inlet to the outlet;
- a volumetric coupling arranged at the inlet and configured for guiding and enabling better measurement of the airflow, wherein the volumetric coupling is according to any one or more of the herein disclosed embodiments; and
- a pressure transducer adapted for measuring pressure at the first and second apertures.

In one aspect of the ventilator chamber, the volumetric coupling comprises:
- an outer frame face and an inner duct face, wherein the faces define a duct narrowing from the outer frame face to the inner duct face, the volumetric coupling being adapted for an airflow in a flow direction along the narrowing of the duct;
- a high-pressure chamber and a low-pressure chamber, wherein the chambers at least partially envelop the duct;
- a first set of holes arranged on the outer frame face, the first set of holes being connected to the high-pressure chamber;
- a second set of holes arranged on the inner duct face, the second set of holes being connected to the low-pressure chamber; and
- a first aperture connected to the high-pressure chamber and a second aperture connected to the low-pressure chamber, the apertures being configured for connection to a pressure transducer. The volumetric coupling may also be according to any one of the herein disclosed embodiments with the same advantageous effects as described herein.

The airflow has a flow direction from the inlet towards the outlet.

In one aspect,the ventilator chamber may surround the ventilator so that only two openings are arranged in the ventilator chamber, wherein the openings are the inlet and the outlet. In a further aspect, the ventilator chamber may have additional openings for routing cables or tubes. In this aspect the additional openings are preferably sealed to avoid air leakage.

In another aspect of the ventilator chamber, the volumetric coupling is arranged so that the inner duct face surrounds the ventilator, i.e., the duct centre is aligned with the central axis of the ventilator. In a further aspect, a plane spanning the duct is aligned substantially with the top of the ventilator.

A plane spanning the inlet may be arranged substantially perpendicular to the central axis.

A plane spanning the outlet may be arranged substantially parallel to the central axis.

One advantage of providing a ventilator chamber is that the chamber may be hot-swappable so that replacement is less time consuming. Furthermore, by being able to extract an entire ventilator chamber from an installation, maintenance and cleaning is much easier as it can be done at e.g., in a workshop or a mobile vehicle workshop.

In a further embodiment of the ventilator chamber, the ventilator chamber further comprises a controller adapted for receiving pressure data from the pressure transducer and adjusting the ventilator speed as function of the received pressure data.

In one aspect the pressure data may be used to obtain a measure of the airflow through the ventilator chamber.

One effect of being able to control and adjust the ventilator based on pressure data is that airflow created through the ventilator chamber may be precisely controlled for the needed application. A further advantage is that the controller may be provided with a control loop to ensure that there is a constant airflow over time, so that the decrease of flow through the ventilator chamber can be compensated.

In a further embodiment of the ventilator chamber, the ventilator is a centrifugal fan.

In one aspect of the ventilator chamber with a centrifugal fan, the inlet and the volumetric coupling may be aligned with an impeller of the centrifugal fan and the outlet may be arranged perpendicular to the inlet plane of the ventilator chamber.

A further objective of the invention is achieved by a ventilation unit comprising at least one ventilator chamber according to any one or more of disclosed embodiments herein.

A ventilation unit comprising multiple ventilator chambers may be used for ventilating multiple rooms independently; for balancing room temperature by circulating cool air during nighttime and keeping out warm air during sunny weather, or the opposite; for efficient heat recovery; and for providing an over-pressure for improving fireplace or stove efficiency. Furthermore, improved air circulation may be used to prevent condensation inside a room or house.

In a further embodiment of the ventilation unit, the ventilation unit comprises a controller adapted for receiving pressure data from the pressure transducer and adjusting the ventilator speed as function of the received pressure data.

One advantage of providing a ventilation unit with a controller is that it may be used to control several ventilators at once, so that ventilation, room temperature balance, heat recovery, and/or prevention of condensation may be performed more efficiently because climate control of both heating, cooling, and/or airflow inside an entire building may be controlled at once.

A further advantage is that a single controller may alert of failures or maintenance requirements in one or more ventilators or ventilator chambers, so that troubleshooting, service, and maintenance of the entire ventilation unit is more efficient.

### Description of the Drawing

Various examples are described hereinafter with reference to the figures. The reference numerals refer to the elements throughout. The elements will thus not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Fig. 1a illustrates a view of a suction side of one embodiment of a volumetric coupling.
Fig. 1b illustrates a view of a pressure side of one embodiment of a volumetric coupling.
Fig. 1c illustrates a cross-sectional view of one embodiment of a volumetric coupling.
Fig. 1d illustrates a cross-sectional view of one embodiment of a volumetric coupling.
Fig. 2a illustrates a view of a suction side of one embodiment of a first assembly part.
Fig. 2b illustrates a view of a first interconnecting side of one embodiment of a first assembly part.
Fig. 3a illustrates a view of a second interconnecting side of one embodiment of a second assembly part.
Fig. 3b illustrates a view of a pressure side of one embodiment of a second assembly part.
Fig. 3c illustrates a cross-sectional and exploded view of one embodiment of a first and second assembly part.
Fig. 4a illustrates one embodiment of a volumetric coupling surrounding a ventilator.
Fig. 4b illustrates one embodiment of a volumetric coupling surrounding a ventilator.
Fig. 5 illustrates one embodiment of a ventilator chamber.
Fig. 6a illustrates one embodiment of a ventilation unit.
Fig. 6b illustrates an exploded view of one embodiment of a ventilation unit 100.
Fig. 7 illustrates an exploded view of one embodiment of volumetric coupling 1 and a ventilator chamber 80.
Fig. 8 illustrates a cross-sectional view of a volumetric coupling 1.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected", or "communicatively connected" to the other element with one or more intervening elements interposed there between.

The terminology used herein is for the purpose of describing particular examples only and is not intended to be limiting. As used herein, the terms "comprises", "comprising", "includes", and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

| **Reference:** | **Reference number:** |
|---|---|
| Volumetric coupling | 1 |
| Duct plane | 10 |
| Duct | 11 |
| Inner duct face | 12 |
| Outer frame face | 13 |
| First set of holes | 14 |
| Second set of holes | 15 |
| Frist hole notches | 151 |
| Second hole notches | 152 |
| Funnel | 16 |
| Channels | 17 |
| Back face | 18 |
| Hooks | 19 |
| Flow direction | 2 |
| Opening | 20 |
| High-pressure chamber | 24 |
| Low-pressure chamber | 25 |
| Suction side | 3 |
| Pressure transducer | 30 |
| First aperture | 34 |
| Second aperture | 35 |
| Pins | 36 |
| Prongs | 37 |
| Pressure side | 4 |
| First assembly part | 40 |
| First chamber wall | 41 |
| Second chamber wall | 42 |
| Clockwise or counter-clockwise direction | 5 |
| Second assembly part | 50 |
| Chamber surface | 51 |
| Vertical distance | 6 |
| First interconnecting side | 7 |
| Second interconnecting side | 8 |
| Ventilator chamber | 80 |
| Inlet | 81 |
| Outlet | 82 |
| Notch | 89 |
| Ventilator | 90 |
| Central axis | 91 |
| Ventilation unit | 100 |

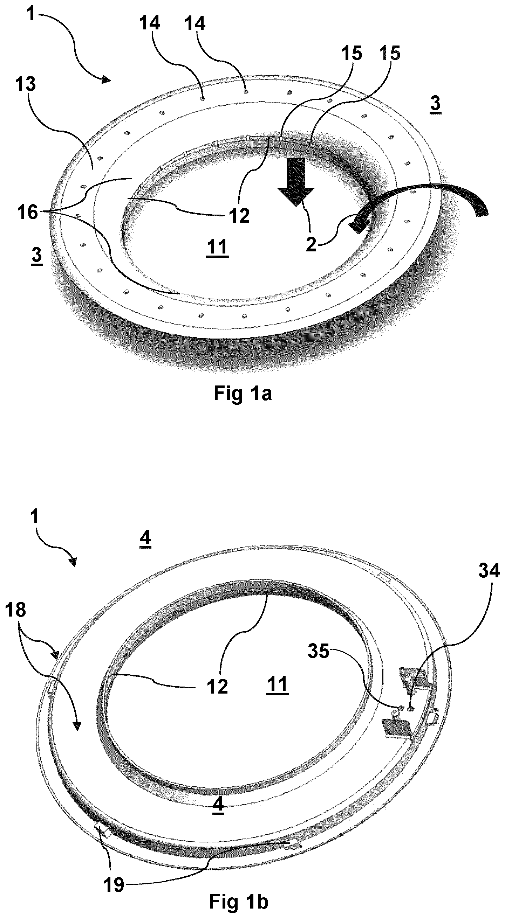

Figure 1a illustrates a view of a suction side 3 of one embodiment of a volumetric coupling 1, wherein the volumetric coupling 1 comprises an outer frame face 13 and an inner duct face 12, wherein the outer frame face 13 and the inner duct face 12 define a duct 11, so that the outer frame face 13 narrows towards the inner duct face 12. The volumetric coupling 1 is adapted to guide an airflow in a flow direction 2 along the narrowing of the duct 11. The volumetric coupling 1 is shaped as a funnel 16 so that the outer frame face 13 is sloping from the outer frame face 13 towards the inner duct face 12.

Figure 1b illustrates a view of a pressure side 4 of one embodiment of the volumetric coupling 1, wherein a back face 18 of the volumetric coupling 1 is shown. The back face 18 is arranged on an opposite side of the outer frame face 13 and the inner duct face 12.

The back face 18 is provided with a plurality of hooks 19 which are configured for engaging with a corresponding notch (not shown here), by rotating the volumetric coupling. Furthermore, the back face 18 is provided with a first aperture 34 and a second aperture 35, the two apertures 34,35 are configured to be connected to a high-pressure chamber and a low-pressure chamber (also not shown here) arranged inside the volumetric coupling.

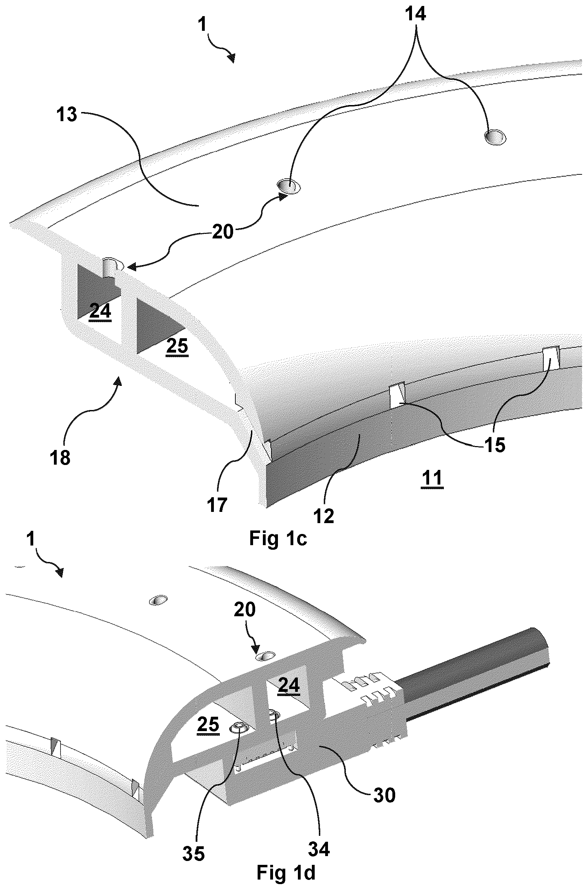

Figure 1c illustrates a cross-sectional view of one embodiment of the volumetric coupling 1, showing the high-pressure chamber 24 and the low-pressure chamber 25 arranged inside the volumetric coupling 1 and in-between the inner duct face 12, the outer frame face 13 and the back face 18. The high-pressure chamber 24 and the low-pressure chamber 25 surround the duct 11, in the same way the inner duct face 12 surrounds the duct 11. The first set of holes 14 are connected to the high-pressure chamber 24 and the second set of holes 15 are connected to the low-pressure chamber 25 through a channel 17. The second set of holes 15 are arranged downstream to the low-pressure chamber 24 relative to the flow direction 2, i.e., the channel 17 has an upward gradient relative to the illustrated orientation of the volumetric coupling 1.

Figure 1c also illustrates how openings 20 of the first set of holes 14 are shaped like teardrops, wherein an apex of the teardrop is pointed in the flow direction (as shown in fig. 1a).

Figure 1d illustrates a cross-sectional view of one embodiment of the volumetric coupling 1, showing the first aperture 34 connected to the high-pressure chamber 24 and the second aperture 35 connected to the low-pressure chamber. A pressure transducer 30 is arranged in connection with the apertures 34,35, wherein the pressure transducer 30 is configured to measure the pressure in the respective chambers 24,25.

Figure 2a illustrates a view of a suction side 3 of one embodiment of the volumetric coupling comprising a first assembly part 40 and a second assembly part (not shown in this figure). The first assembly part 40 comprises an outer frame face 13 and an inner duct face 12, wherein the faces 12,13 define a duct 11 narrowing from the outer frame face 13 to the inner duct face 12. A first set of holes 14 are arranged on the outer frame face 13 and connects through to an opposite side of the outer frame face 13. A plurality of first hole notches 151 are arrange on an edge of the inner duct face 12, the first hole notches 151 are more clearly illustrated in figure 2b.

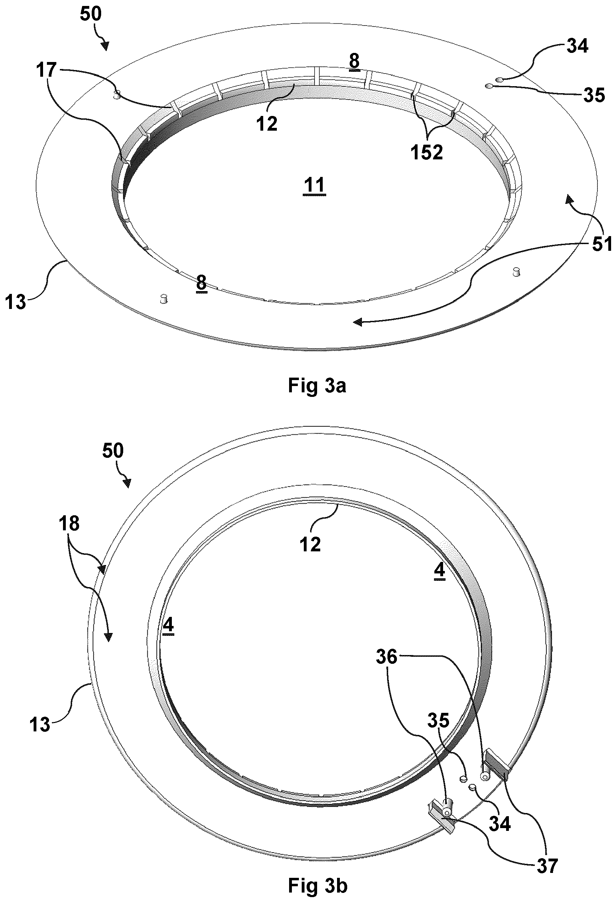

Figure 2b illustrates a view of a first interconnecting side 7 of one embodiment of the first assembly part 40, wherein a first chamber wall 41 and a second chamber wall 42 protrudes from the back face 18. The two chamber walls 41,42 are configured for providing a part of the high-pressure chamber and the low-pressure chamber (both are not illustrated in full in this figure), when the first assembly part 40 and the second assembly part (50, illustrated on fig. 3a and 3b) are connected together. I.e., the high-pressure chamber is provided between the back face 18, the two chamber walls 41,42 and a chamber surface of the second assembly part, and the low-pressure chamber is provided between the back face 18, the second chamber wall 42 and a chamber surface of the second assembly part. Due to the sloping funnel 16 shape of the first assembly part 40, the low-pressure chamber has a cross-section with a triangular-like shape.

The second set of holes 15 or at least a part of the second set of holes 15 and the channels 17 are provided on a side of the inner duct face 12 of the first assembly part 40 facing the first interconnecting side 7. The second set of holes 15 or at least a part of the second set of holes 15 and the channels 17 are provided by a plurality of first hole notches 151. The plurality of first hole notches 151 is arranged between an edge of the inner duct face 12 and the low-pressure chamber.

Figure 3a illustrates a view of a second interconnecting side 8 of one embodiment of the volumetric coupling comprising a first assembly part (not shown in this figure) and a second assembly part 50. The second assembly part 50 comprises an outer frame face 13 and an inner duct face 12, wherein the faces 12,13 define a duct 11 narrowing from the outer frame face 13 to the inner duct face 12. The second assembly part 50 has a chamber surface 51 facing the suction side 3, wherein the chamber surface 51 is configured for being connected to a lower part of the first assembly part.

On the chamber surface 51 a first aperture 34 and a second aperture 35 are arranged. The apertures 34,35 are configured to connect the high-pressure chamber and the low-pressure chamber to a pressure transducer (not shown here), respectively. Furthermore, a plurality of second hole notches 152 are arranged along an inner edge of the inner duct face 12, the second hole notches 152 are a part of the second set of holes 15 and channels 17, which are formed when the first assembly part (40, illustrated on fig. 2a and 2b) and the second assembly part 50 are connected together.

The first interconnecting side 7 of the first assembly part 40 is configured to be connected with the second interconnecting side 8 of the second assembly part 50.

Figure 3b illustrates a view of the pressure side 4 of the second assembly part 50, wherein the second assembly part 50 comprises a back face 18 being arranged opposite to the chamber surface 51. On the back face 18 the first aperture 34 and the second aperture 35 are arranged. Beside the apertures 34,35, pins 36 and prongs 37 are arranged for guiding and holding a pressure transducer to the back face 18.

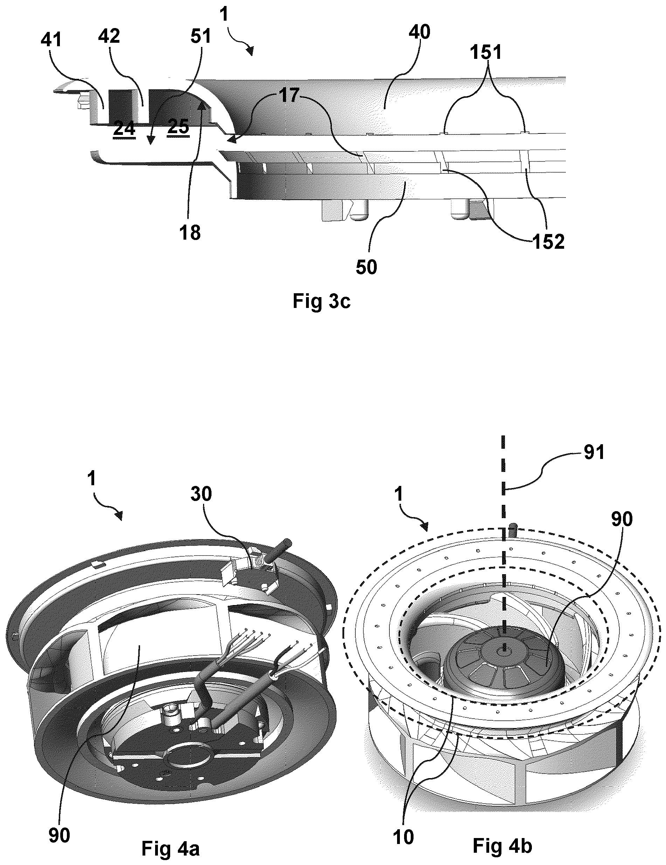

Figure 3c illustrates a cross-sectional and exploded view of the first assembly part 40 and the second assembly part 50, wherein the two assembly parts 40,50 may be configured to be connected by ultrasonic welding. The cross-sectional view illustrates how the high-pressure chamber 24 and the low-pressure chamber 25 are formed between the first chamber wall 41, the second chamber wall 42, the back face 18, and the chamber surface 51. The cross-sectional view also illustrates how the second set of holes 15, and the channels 17 are formed between first hole notches 151 and the second hole notches 152 arranged towards the edge surrounding the duct of each inner duct face of the assembly parts 40,50.

Figure 4a illustrates one embodiment of a volumetric coupling 1, wherein the volumetric coupling 1 surrounds a ventilator 90. Furthermore, a pressure transducer 30 is arranged on the volumetric coupling 1, wherein the pressure transducer 30 is configured for measuring an airflow through the volumetric coupling 1.

Figure 4b illustrates one embodiment of a volumetric coupling 1, wherein the volumetric coupling 1 surrounds a ventilator 90. The ventilator 90 has a central axis 91 which is substantially aligned with a centre of the duct. Furthermore, the duct has a duct plane 10 spanning the opening of the duct, wherein the top of the ventilator is substantially parallel with the duct plane 10.

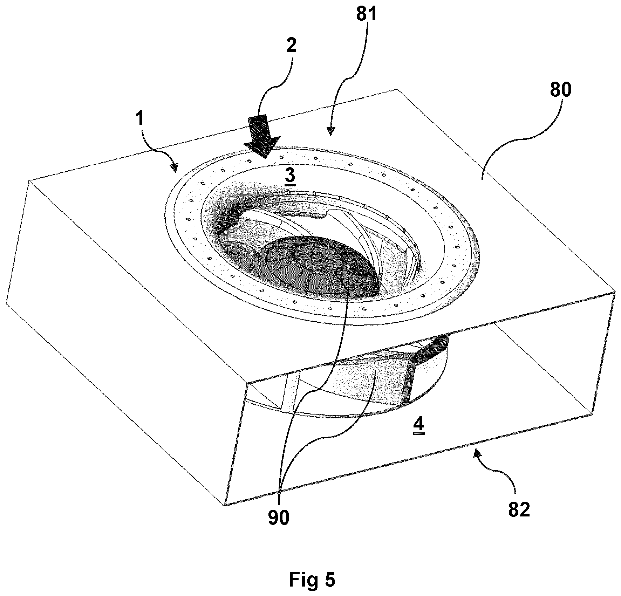

Figure 5 illustrates one embodiment of a ventilator chamber 80 for creating an airflow. The ventilator chamber 80 comprises an inlet 81 for suction of air into the ventilator chamber 80 and an outlet 82 for pushing of air out of the ventilator chamber 80. Inside the ventilator chamber 80 a ventilator 90 is arranged. A volumetric coupling 1 according to any one of the herein disclosed embodiments is arranged on the inlet 81 of the ventilator chamber 80. The volumetric coupling 1 is configured for enabling better measurement of the airflow through the inlet 81. In this embodiment the outlet 82 is arranged parallel to a rotational axis (or central axis) of the ventilator.

Generally, the flow direction 2 is from the suction side 3 towards the pressure side 7, i.e., from the inlet 81 towards the outlet 82.

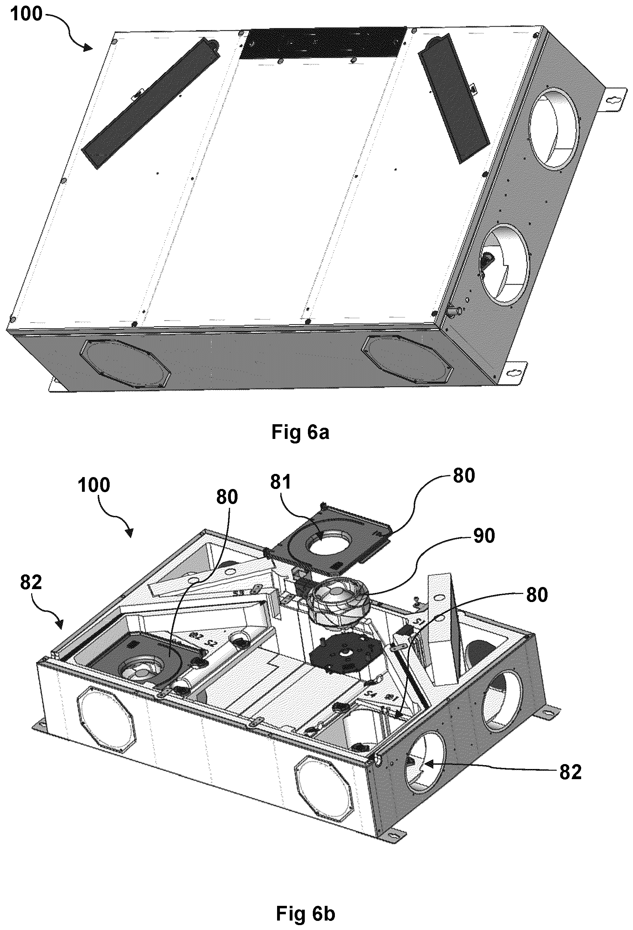

Figure 6a illustrates one embodiment of a ventilation unit 100 according to any one of the herein disclosed embodiments.

Figure 6b illustrates an exploded view of one embodiment of a ventilation unit 100. The ventilation unit 100 comprises two ventilator chambers 80 each with an inlet 81, an outlet 82, and a ventilator 90. The ventilator chambers 80 may be configured with a volumetric coupling according to the herein disclosed embodiments, wherein the volumetric coupling may be configured to enable better measurement of an airflow through each ventilator chamber 80. Furthermore, the ventilation unit 100 comprises a controller (not shown), wherein the controller may be configured for adjusting the ventilators 90 as a function of received pressure data and/or measurement of airflow.

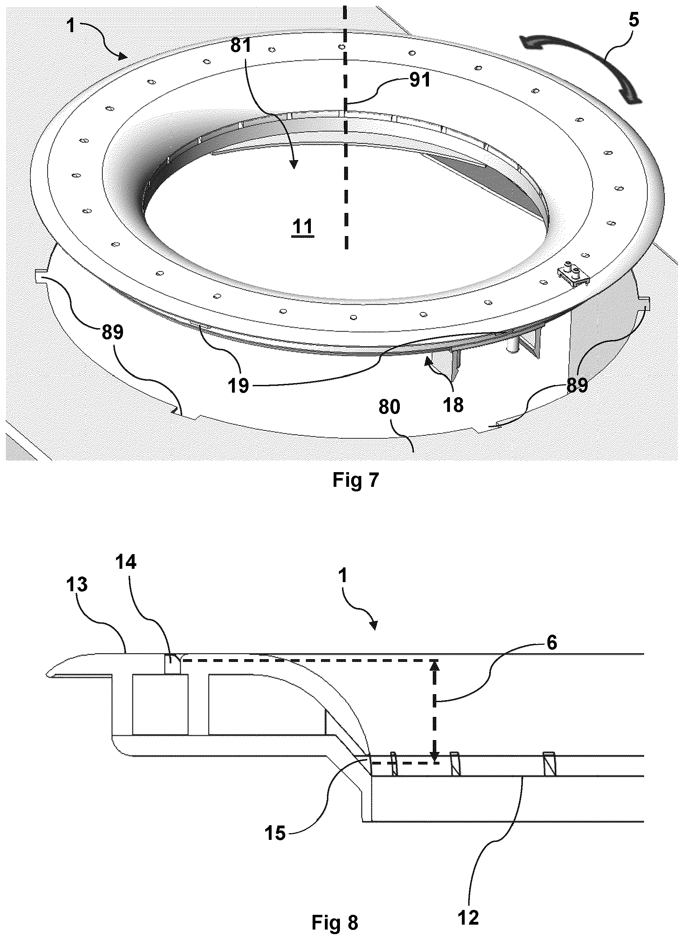

Figure 7 illustrates an exploded view of one embodiment of volumetric coupling 1 and a ventilator chamber 80 with an inlet 81, wherein a duct 11 of the volumetric coupling 1 is adapted for being arranged at the inlet 81 of the ventilator chamber 80. The volumetric coupling has a plurality of hooks 19 arranged on a back face 18 of the volumetric coupling. The hooks 19 are configured to fit into a plurality of notches 89 arranged around the circumference of the inlet 81 when the volumetric coupling is arranged on the ventilator chamber 80. Then, by turning the volumetric coupling in a clockwise or counter-clockwise direction 5 relative to the central axis 91, the volumetric coupling 1 is fastened or released to the ventilator chamber 80.

Figure 8 illustrates a cross-sectional view of a volumetric coupling 1, wherein a vertical distance 6 is measured between the first set of holes 14 and the second set of holes 15. The vertical distance 6 is measured perpendicular to a plane spanned by the first set of holes 14 (or the outer frame face 11) and a planned spanned by the second set of holes 15 (or the inner duct face 12).

## Claims

1. A volumetric coupling (1) for guiding an airflow and enabling better measurement of said airflow, the volumetric coupling (1) comprising:
- an outer frame face (13) and an inner duct face (12), wherein the faces (12, 13) define a duct (11) narrowing from the outer frame face (13) to the inner duct face (12), the volumetric coupling (1) being adapted for an airflow in a flow direction (2) along the narrowing of the duct (11);
- a high-pressure chamber (24) and a low-pressure chamber (25), wherein the chambers (24, 25) at least partially envelop the duct (11);
- a first set of holes (14) arranged on the outer frame face (13), the first set of holes (14) being connected to the high-pressure chamber (24);
- a second set of holes (15) arranged on the inner duct face (12), the second set of holes (15) being connected to the low-pressure chamber (25); and
- a first aperture (34) connected to the high-pressure chamber (24) and a second aperture (35) connected to the low-pressure chamber (25), the apertures (34,35) being configured for connection to a pressure transducer (30).

2. The volumetric coupling (1) according to claim 1, wherein the volumetric coupling (1) is shaped as a funnel (16), so that the outer frame face (13) is sloping from the outer frame face (13) towards the inner duct face (12).

3. The volumetric coupling (1) according to claim 1 or 2, wherein the volumetric coupling (1) comprises a set of channels (17) interconnecting the second set of holes (15) and the low-pressure chamber (24), wherein the second set of holes (15) are downstream to the low-pressure chamber (24) relative to the flow direction (2).

4. The volumetric coupling (1) according to any one of the preceding claims, wherein openings (20) of the first and/or second set of holes (14, 15) are shaped like teardrops, wherein an apex of the teardrop is pointed in the flow direction (2).

5. The volumetric coupling (1) according to any one of the preceding claims, wherein the first and/or second set of holes (14, 15) substantially surrounds the duct (11).

6. The volumetric coupling (1) according to any one of the preceding claims, wherein the first and/or second set of holes (14, 15) are evenly distributed.

7. The volumetric coupling (1) according to any one of the preceding claims, wherein the volumetric coupling (1) comprises a first assembly part (40) and a second assembly part (50) configured to be connected together to form the volumetric coupling (1).

8. The volumetric coupling (1) according to claim 7, wherein the first assembly part (40) and the second assembly part (50) are connected by a process of ultrasonic welding.

9. The volumetric coupling (1) according to any one of the preceding claims, wherein the high-pressure chamber (24) and the low-pressure chamber (25) are arranged on a chamber plane being substantially parallel to a plane spanning the duct (11).

10. The volumetric coupling (1) according to any one of the preceding claims, wherein a back face (18) being on an opposite side of the outer frame face (13), said back face (18) comprising one or more hooks (19) configured for being joined with a notch (89) by rotating the volumetric coupling (1), so that the volumetric coupling (1) is fastened to said notch (89).

11. A ventilator chamber (80) for creating airflow comprising:
- an inlet (81) for suction of air into the ventilator chamber (80);
- an outlet (82) for pushing of air out of the ventilator chamber (80);
- a ventilator (90) configured for creating said airflow from the inlet (81) to the outlet (82);
- a volumetric coupling (1) arranged at the inlet (81) and configured for guiding and enabling better measurement of the airflow, wherein the volumetric coupling (1) is according to any one or more of claims 1 to 10; and
- a pressure transducer (30) adapted for measuring pressure at the first and second apertures (34, 35).

12. The ventilator chamber (80) according to claim 11, wherein the ventilator chamber further comprises a controller adapted for receiving pressure data from the pressure transducer (30) and adjusting the ventilator speed (90) as function of the received pressure data.

13. The ventilator chamber (80) according to claim 11 or 12, wherein the ventilator (90) is a centrifugal fan.

14. A ventilation unit (100) comprising at least one ventilator chamber (80) according to any one of claims 11 to 13.

15. The ventilation unit according to claim 14, wherein the ventilation unit (100) comprises a controller adapted for receiving pressure data from the pressure transducer (30) and adjusting the ventilator (90) as function of the received pressure data.
